# EUROPEAN PATENT SPECIFICATION

(11) **EP 3 759 899 B1**
(45) Date of publication and mention of the grant of the patent: **27.03.2024**
(21) Application number: 19704813.5
(22) Date of filing: 13.02.2019
(51) Int. Cl.: A24F 40/65, H04M 1/72412

(54) **APPARATUS AND METHOD FOR LOCATION MONITORING OF A NETWORK-ENABLED SMOKING SUBSTITUTE DEVICE**
VORRICHTUNG UND VERFAHREN ZUR ORTSÜBERWACHUNG EINER NETZWERKFÄHIGEN RAUCHERSATZVORRICHTUNG
APPAREIL ET PROCÉDÉ DE SURVEILLANCE DE LOCALISATION D'UN DISPOSITIF DE SUBSTITUTION À FUMER ACTIVÉ PAR RÉSEAU

(30) Priority: 26.02.2018 GB 201803029
(43) Date of publication of application: 06.01.2021
(73) Proprietor: Imperial Tobacco Limited, Bristol, BS3 2LL (GB)
(72) Inventor: FARD, Daniel, Liverpool, Merseyside L24 9HP (GB); TALBOT, Oliver, Liverpool, Merseyside L24 9HP (GB)
(74) Representative: Mewburn Ellis LLP
(86) International application number: PCT/EP2019/053499
(87) International publication number: WO 2019/162155

(56) References cited:
- WO-A1-2014/121578
- WO-A1-2016/123307
- US-A1- 2015 181 945
- US-A1- 2016 164 973
- US-A1- 2017 014 582

## Description

### Field of the Invention

The present invention relates to smoking substitute devices. In particular, it relates to a network-enabled smoking substitute device, i.e. a smoking substitute device capable of wireless communication with other devices, e.g. over a short range network.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol, also referred to as a "vapour", that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu^{™} e-cigarette. The myblu^{™} e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO^{™} e-cigarette. The blu PRO^{™} e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute device is the so-called "heat not burn" ("HNB") approach in which tobacco (rather than e-liquid) is heated or warmed to release vapour. The tobacco may be leaf tobacco or reconstituted tobacco. The vapour may contain nicotine and/or flavourings. In the HNB approach the intention is that the tobacco is heated but not burned, i.e. does not undergo combustion.

A typical HNB smoking substitute device may include a main body and a consumable. The consumable may include the tobacco material. The main body and consumable may be configured to be physically coupled together. In use, heat may be imparted to the tobacco material by a heating device that is typically located in the main body, wherein airflow through the tobacco material causes moisture in the tobacco material to be released as vapour. A vapour may be formed from a carrier in the tobacco material (this carrier may for example include propylene glycol and/or vegetable glycerin) and additionally volatile compounds released from the tobacco. The released vapour may be entrained in the airflow drawn through the tobacco.

As the vapour passes through the smoking substitute device (entrained in the airflow) from an inlet to a mouthpiece (outlet), the vapour cools and condenses to form an aerosol (also referred to as a vapour) for inhalation by the user. The aerosol will normally contain the volatile compounds.

In HNB smoking substitute devices, heating as opposed to burning the tobacco material is believed to cause fewer, or smaller quantities, of the more harmful compounds ordinarily produced during smoking. Consequently, the HNB approach may reduce the odour and/or health risks that can arise through the burning, combustion and pyrolytic degradation of tobacco.

An example of the HNB approach is the IQOS^{™} smoking substitute device from Philip Morris Ltd. The IQOS^{™} smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HNB approach is the device known as "Glo"^{™} from British American Tobacco p.l.c. Glo^{™} comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

The present invention has been devised in light of the above considerations.

US2017/014582 A1 proposes systems and methods for intelligent vaporizers.

### Summary of the Invention

At its most general, the present invention utilizes the ability of a smoking substitute device to wirelessly connect to a portable communication terminal (e.g. mobile phone) to provide a user with location-related information about the smoking substitute device. In one example, this ability may manifest as a loss or theft prevention technique, e.g. based on detecting a dropped connection between the smoking substitute device and the portable communication terminal which indicates that they are no longer located together. In another example, this ability may make use of location-tracking functionality on the portable communication terminal and usage data from the smoking substitute device to make more sophisticated or user-tailored judgements.

According to an aspect of the invention, there is provided a computer-implemented method according to claim 1.

The smoking substitute device may resemble any of the smoking substitute devices discussed above further comprising a wireless interface for establishing and communicating over the wireless communication channel between the smoking substitute device and a portable communication terminal. The wireless interface may utilities any suitable wireless protocol. For example, the wireless interface may operate over a short range network. For example, it may comprise a wireless personal area network (WPAN), e.g. using Bluetooth^{™}, ZigBee, a WiFi personal hotspot or the like. The smoking substitute device may pair with the portable communication terminal over the wireless communication channel. The portable communication terminal may be a master device and the smoking substitute device may be a slave device.

The portable communication terminal may be any communications device capable of wireless interaction with the smoking substitute device, e.g. of over a short range network. The portable communication terminal may be a mobile phone (e.g. smartphone), tablet computer, laptop computer, or the like.

The method comprises detecting, by the portable communication terminal, the loss of the wireless connection. This may be done in any conventional manner. For example, the portable communication terminal may be arranged to poll the smoking substitute device on a regular (e.g. periodic) basis. The loss of the wireless connection may be detected as a failure to receive a response the polling. Alternatively or additionally, the smoking substitute device may be configured to transmit data (e.g. usage data) to the portable communication terminal on a regular (e.g. periodic) basis. The loss of the wireless connection may be detected as an absence of these transmissions for a predetermined period.

The method includes determining, by the portable communication terminal, whether or not the loss of the wireless connection is notifiable. The step of issuing the dropped connection notification is arranged to occur upon determining that the loss of the wireless connection is notifiable. If the loss of the wireless connection determined to be not notifiable, the dropped connection notification may be suppressed.

Herein, the functions performed by the portable communication terminal may be done locally, e.g. using a processor and memory in the portable communication terminal itself, or at a remote application server (e.g. in the cloud), which is in networked communication with the portable communication terminal. The network communication between the portable communication terminal and the application server may be separate or independent of the wireless communication channel between the smoking substitute device and the portable communication terminal. The network communication may comprise a connection over the world wide web. The network communication may utilise a cellular network or a WiFi network, for example.

Communication between the portable communication terminal and the application server may be controlled by a app running on the portable communication terminal. The app may run in the background on the portable communication terminal to handle communication with the smoking substitute device.

The step of determining whether or not the loss of the wireless connection is notifiable comprises determining whether or not one or more notification suppression criteria are fulfilled. The notification suppression criteria may further relate to any one or any combination of: a duration of the loss of the wireless connection; a presence of a wireless connection between the portable communication terminal and another smoking substitute device. By enabling suppression of the notification in certain scenarios, the method may prevent unnecessary or unwanted notifications from being issued. This is beneficial in terms or avoiding wasting power and processing resources on unwanted message, but also in terms of notifications, when actually issued, being more likely to be effective because the user is not in the habit of ignoring them.

In one example, the method may include obtaining, from a location tracking unit of the portable communication terminal, a current location of the portable communication terminal; comparing the obtained current location with a stored list of locations at which notifications are to be suppressed; and determining that the loss of the wireless connection is not notifiable if the current location matches a location on the stored list. The stored list may be user adjustable. This enables the user to set "safe" locations, e.g. home or workplace, where the smoking substitute device can disconnect from the portable communication terminal without alarm.

In an example which is in accordance with the present invention, the method may include obtaining, from a location tracking unit of the portable communication terminal, a current location of the portable communication terminal upon detecting the loss of the wireless connection; comparing the obtained current location with a map of historical usage locations; and determining that the loss of the wireless connection is notifiable if the current location matches a location on the map of historical usage locations. In this example, historical usage of the smoking substitute device is used to determine whether or not a notification is warranted.

The map of historical usage locations may be assembled from data received at or otherwise obtained by the portable communication terminal. For example, before the loss of the wireless connection, the method may include: obtaining, by the portable communication terminal, usage data from the smoking substitute device; obtaining, from the location tracking unit of the portable communication terminal, location information corresponding to the usage data; creating, by the portable communication terminal, the map of historical usage locations using the usage data and the corresponding location information. The dropped connection notification may be any suitable message or prompt. Issuing the notification may comprises generating a visible, audible or tactile output on the portable communication device. The nature of the notification may be selectable by the user, e.g. via the app running on the portable communication terminal.

In another aspect, the present invention provides an apparatus for monitoring a location of a smoking substitute device, according to claim 9.

In yet another aspect, the invention comprises a computer program product comprising a computer-readable storage medium having computer-readable instructions stored thereon, wherein the computer-readable instructions are executable as an app in a portable communication terminal to perform the method of monitoring a location of a smoking substitute device disclosed above.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4** is a flow chart of a location monitoring method that is an embodiment of the invention.
**Figure 5** is a flow chart of a notification determining process that can be used with the location monitoring method of Figure 4.
**Figure 6** is a schematic view of a location monitoring apparatus that is an embodiment of the invention.

### Detailed Description of the Invention

Aspects and embodiments of the present invention will now be discussed with reference to the accompanying figures. Further aspects and embodiments will be apparent to those skilled in the art.

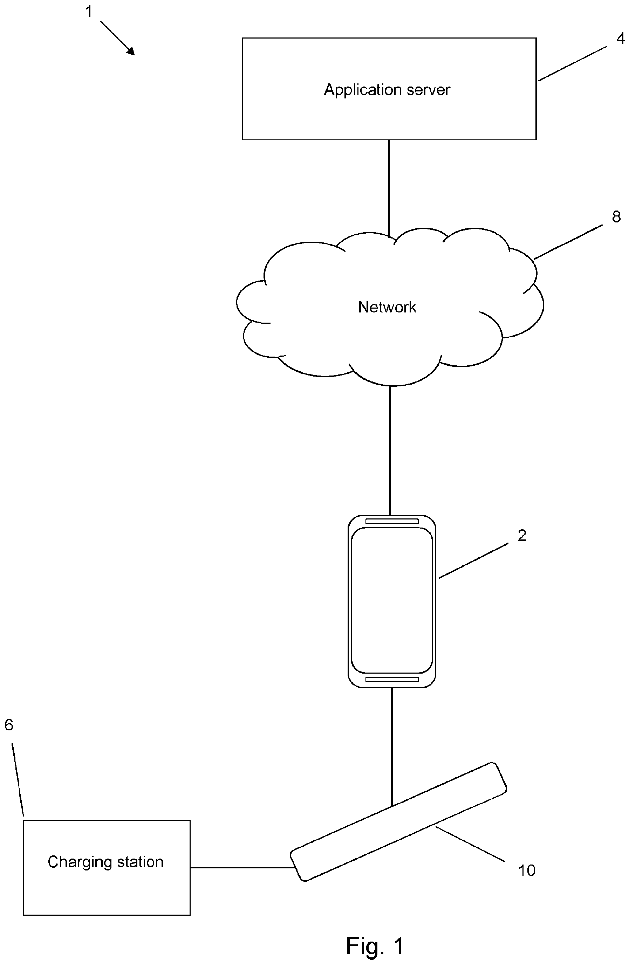

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth^{™}, with an application (or "app") installed on the mobile device 2, e.g. via a suitable wireless interface (not shown) on the mobile device 2. The mobile device 2 may be any portable communication terminal capable of running an app, such as a mobile phone or smartphone, a tablet computer, or a laptop computer, for example. The application on the mobile phone is configured to communicate with the application server 4, via a network 8. The application server 4 may utilise cloud storage, for example.

The network 8 may include a cellular network and/or the internet.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

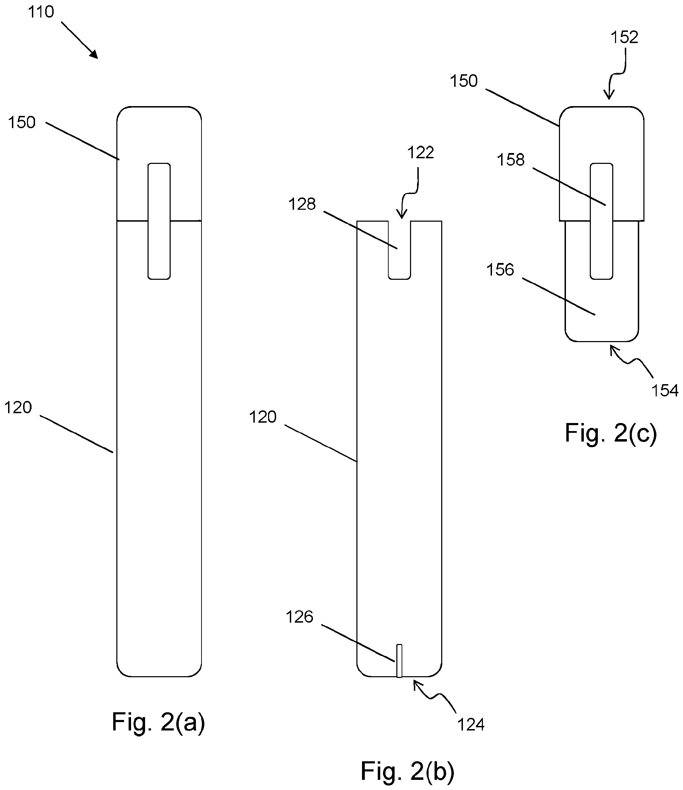

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120. In other examples, the main body 120 and the consumable could be physically coupled together by screwing one onto the other, or through a bayonet fitting, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

The tank 156 may be referred to as a "clearomizer" if it includes a window 158, or a "cartomizer" if it does not.

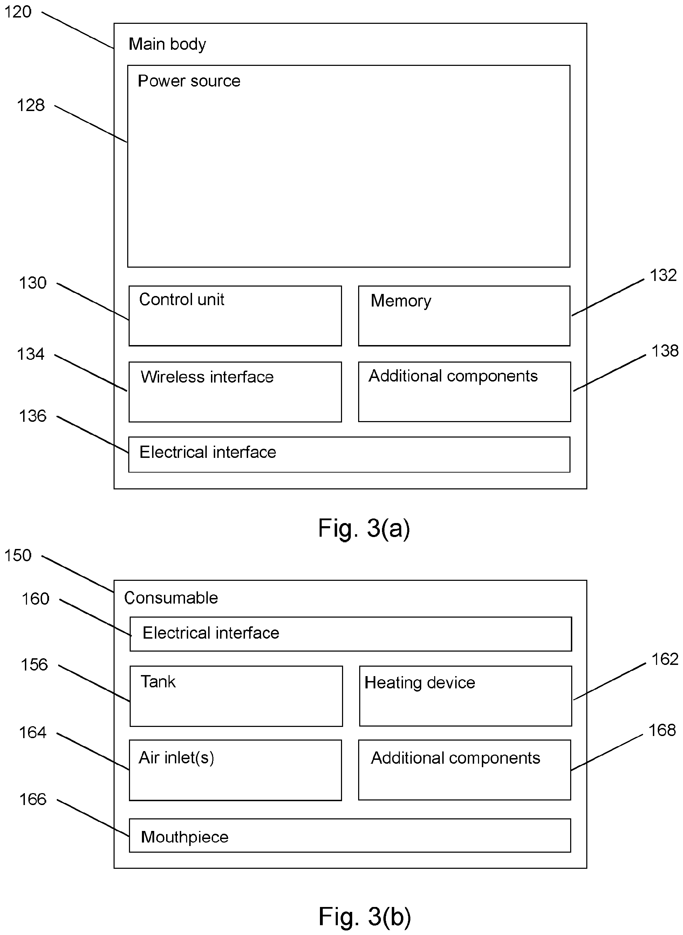

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 may include non-volatile memory for storing computer readable instructions which, when executed, control operation of the device. In this example, the computer readable instructions may operate to establish and maintain connectivity with a mobile device as discussed in more detail below.

The wireless interface 134 is preferably configured to communicate wirelessly with the mobile device 2 via a short range wireless network, e.g. a wireless personal area network (WPAN). The wireless interface 134 may be incorporate any suitable short-distance wireless technology, e.g. Bluetooth^{™}, ZigBee, Wireless USB, or the like. To this end, the wireless interface 134 could include a Bluetooth^{™} antenna. Other wireless communication interfaces, e.g. WiFi, are also possible.

The electrical interface 136 of the main body 120 may include one or more electrical contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could instead be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

As shown in Fig. 3(b), the consumable 150 includes the tank 156, an electrical interface 160, a heating device 162, one or more air inlets 164, a mouthpiece 166, and, optionally, one or more additional components 168.

The electrical interface 136 of the main body 120 and an electrical interface 160 of the consumable 150 are configured to cooperate in a manner that electrically couples the main body 120 to the consumable 150. The electrical coupling may permit electrical power and, optionally, data to pass between the main body 120 and consumable 150. The electrical interface 160 of the consumable 150 may include one or more electrical contacts configured to physically contact the electrical interface 136 of the main body 120. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS^{™} smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO^{™} e-cigarette discussed above.

As another example, an entirely disposable (one use) smoking substitute device could be used as the smoking substitute device 10 of Fig. 1, instead of the smoking substitute device 110.

Embodiments of the present invention relate to the configuration and use of a network-enabled smoking substitute device such as that discussed above to permit monitoring of the location of the device relative to a mobile device with which it is connected. Where the mobile device possesses location tracking functionality, e.g. using GPS or the like, the current location of the mobile device may be used to influence the location monitoring function.

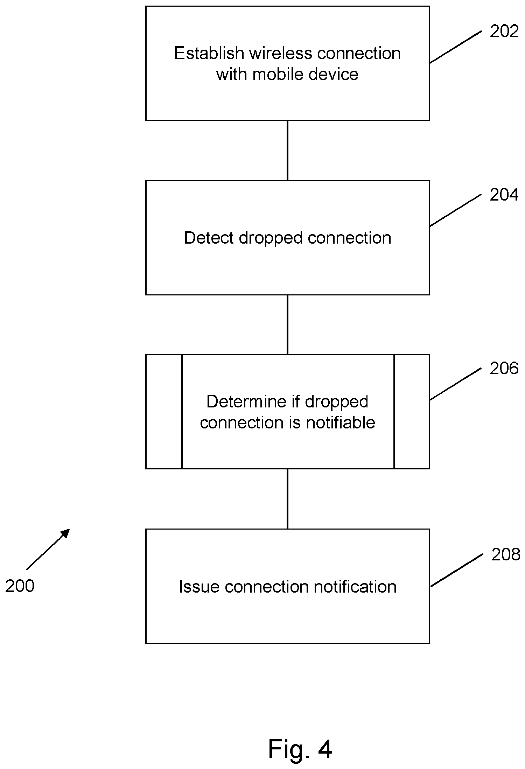

Fig. 4 is a flow chart showing steps in a location monitoring method 200 that is an embodiment of the invention. The method 200 begins with a step 202 of establishing a wireless connection between a smoking substitute device (such as the device 110 discussed above) and a mobile device (such as the mobile device 2 discussed above). The wireless connection may be via any suitable wireless protocol that permits transmission of information. For example, the smoking substitute device may pair with the mobile device using a short range transmission protocol such as Bluetooth^{™} or the like. The smoking substitute device may be wirelessly connectable to the mobile device via any suitable personal area network.

When the wireless connection is established, the smoking substitute device may be configured to share information with the mobile device, e.g. by transmitting data packets on a regular or ad hoc basis. The data packets may relate to usage of the device, e.g. to indicate an activation event for the heating element. The mobile device may run an app associated with the smoking substitute device. The app may be configured to run in the background on the mobile device, where it may receive and process the data packets. The app may build a profile of device usage based on the data packets as discussed below.

The app may be configured to monitor the wireless connection to the smoking substitute device. For example, the app may control the mobile device to poll the smoking substitute device on a regular, periodic or ad hoc basis to determine whether or not the wireless connection is still present. Polling can be suspending or interrupted during data transmission from the smoking substitute device. The mobile device may be configured as a master device of a wireless personal area network (e.g. Bluetooth piconet or the like), with the smoking substitute device being a slave unit associated with the network. Following initial registration, the mobile device and smoking substitute device may automatically pair on the wireless personal area network when connectivity is enabled on both devices and the smoking substitute device is within the wireless personal area network range, i.e. located within a certain distance of the mobile device.

In this arrangement, the presence of the connection thus implies that the smoking substitute device is at the same location as the mobile device. Conversely, a lost or dropped connection may indicate that the smoking substitute device is in a different location from the mobile device.

The method continues with a step 204 of detecting, by the app running on the mobile device, that the wireless connection between the smoking substitute device and mobile device has been lost. The lost connection may be detected in any conventional manner, e.g. where there is no detectable response to a polling request from the mobile device.

Upon detecting a dropped connection, the method continues with a step 206 of determining, by the app running on the mobile device, if the dropped connection is notifiable. The app is generally configured to utilise the mobile device to notify a user when a connection to the smoking substitute device is lost. The app can be configured to issue a notification every time the connection is lost. However, it can be recognised that there may be certain circumstances in which a user would be less concerned about a dropped connection. Moreover, in general it is desirable to avoid issuing an excessive number of notifications because (i) it can render them less effective (e.g. because a user gets into a habit of ignoring or cancelling them), (ii) it can be annoying for the user, and (iii) it wastes processing and power resources in the mobile device.

Accordingly, the app may be configured, and indeed may be configurable by a user, to ignore dropped connections in certain circumstances. In practice, the app may determine whether or not one or more notification suppression criteria are fulfilled upon detecting the dropped connection. The notification suppression criteria may relate to a variety of factors. For example, one criterion may be the duration for which the connection is dropped. In this example, the dropped connection may only be notifiable after a certain amount of time, or after a certain number of reconnection attempts. In another example, the a notification suppression criterion may relate to the existence of connections to one or more other smoking substitute devices. If a user possesses more than one smoking substitute device, it may not be necessary to notify a dropped connection to a specific device as long as a connection exists to another device.

The step 206 of determining whether or not to notify a dropped connection may make use of other functionality present on the mobile device. For example, the mobile device may be equipped with a location tracking unit (e.g. using GPS, assisted GPS, GSM localization or the like), so that is location can be determined. The step 206 of determining whether or not to notify a dropped connection may utilise a current location of the mobile phone. The notification suppression criteria may include a list (e.g. a preset or user-configurable list) of locations in which dropped connection notifications are suppressed. For example, a user may decide to suppress notifications when the mobile device is located at home or at their normal workplace.

The app may also be configured to utilise the location tracking unit in conjunction with usage data received from the smoking substitute device to create a map of usage locations. The map may be represented by a data structure that associates locations (from the location tracking unit) with usage information (i.e. number and/or time of activation events). The map may be stored locally (on the mobile device) and/or in the application server accessible by the mobile device via the app associated with the smoking substitute device. The step 206 of determining whether or not to notify a dropped connection may utilise the map of usage locations. For example, upon the detecting a dropped connection, the app use the current location of the mobile device (e.g. obtained from the location tracking unit) to query the map of usage locations to determine whether or not the current location is associated with historical use of the device. If the map indicates that there is no historical usage at the current location, the dropped connection notification may be suppressed or issued at a lower urgency level.

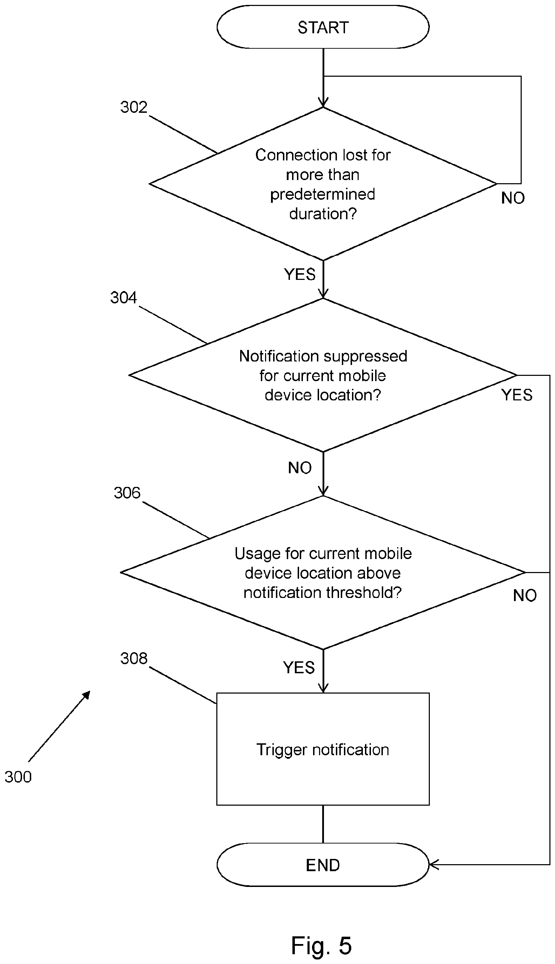

If the step 206 determines that the dropped connection is notifiable, the method continues with a step 208 of issuing a dropped connection notification. The notification may be visible, audible, tactile or a combination thereof. For example, the notification may cause the mobile device to vibrate and simultaneously display a banner with a message that is indicative of the dropped connection. The manner in which the notification is issued may be controlled by the user in a conventional manner. In one example, the app may be configured to send different types of notification depending on an urgency level associated with the notification. The step 206 of determining whether or not to notify a dropped connection may assign an urgency level to the notification based on the notification suppression criteria. Fig. 5 is a flow chart showing one example of a notification determining process 300 that can be used as the step 206 of determining whether or not to notify a dropped connection discussed above. It is to be understood that the notification suppression criteria used in this process represent only one example. In other embodiments, this process may include only one of these criteria, or may be arranged so that the criteria are judged independently so that a notification is suppressed if any one of the criteria are fulfilled. The notification determining process 300 begins with a step 302 of judging whether or not the connection has been lost for more than a predetermined duration. The duration may be set based on a time period (e.g. 30 seconds) or a number of polling or reconnection requests (e.g. 10). If the predetermined duration has not passed, the process circles round.

If the predetermined duration has passed, the process moves to a step 304 of judging whether or not notifications are suppressed for the current mobile device location. The location may be called from a location tracking unit of the mobile device at this point, or may already have been obtained by the app running in the background. If notifications are suppressed for the current location, the process ends and no action is taken with respect to the dropped connection.

If notifications are not suppressed for the current location, the process moves to a step 306 of judging whether usage of the smoking substitute device at the current location is above a notification threshold. In this step, the map of usage locations may be called by the app. The current location may be matched to a location stored in the map to look up historical usage data for that location. The historical data may be compared to a threshold to determine whether or not to suppress the notification. For example, the map may indicate that a certain location is associated with a pattern (e.g. weekly or daily) of activation events. If the current location and time do not fit any pattern, the notification can be suppressed. However, if the historical usage at the current location fits of matches with the timing of the dropped connection, the process moves to a step 308 of issuing the dropped connection notification, e.g. in the manner described above with respect to step 208.

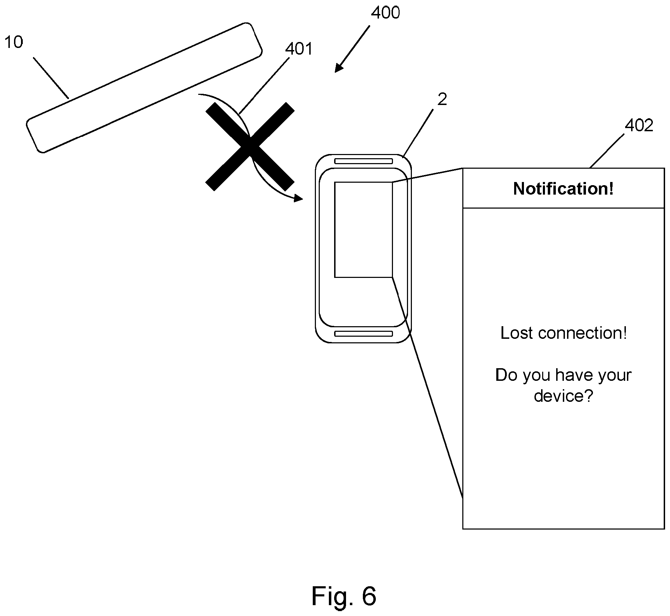

Fig. 6 is a schematic view of a location monitoring apparatus 400 that is an embodiment of the invention when in use. The apparatus 400 comprises the mobile device 2 and smoking substitute device 10 discussed above. The smoking substitute device 10 is configured to be capable of wireless communication with the mobile device over a suitable short range network 401, over which it can transmit usage data as discussed above.

The mobile device 2 comprises a display screen as is conventional. The app may be configured to display a notification 402 on the display screen. The notification 402 may shown information indicative of a dropped connection to the smoking substitute device 10.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method for monitoring a smoking substitute device (10, 110), the method comprising:
determining, by a portable communication terminal (2), in response to detecting loss of a wireless connection between the portable communication terminal (2) and the smoking substitute device (10, 110), whether or not the loss of the wireless connection is notifiable, wherein determining whether or not the loss of the wireless connection is notifiable comprises determining whether or not one or more notification suppression criteria are fulfilled; and
issuing, by the portable communication terminal (2) upon determining that the loss of the wireless connection is notifiable, a dropped connection notification
**characterized in that** the notification suppression criteria relate to a current location of the portable communication terminal (2), and historical smoking substitute device (10, 110) usage data for the current location.

2. The method of claim 1 further comprising:
detecting, by the portable communication terminal (2), the loss of the wireless connection.

3. The method of claim 1 or 2, wherein the dropped connection notification is suppressed upon determining that the loss of the wireless connection is not notifiable.

4. The method of any one of claims 1 to 3, wherein the notification suppression criteria further relate to any one or any combination of:
a duration of the loss of the wireless connection;
a presence of a wireless connection between the portable communication terminal (2) and another smoking substitute device.

5. The method of any one of claims 1 to 4 further comprising:
obtaining, from a location tracking unit of the portable communication terminal, the current location of the portable communication terminal;
comparing the obtained current location with a stored list of locations at which notifications are to be suppressed; and
determining that the loss of the wireless connection is not notifiable if the current location matches a location on the stored list.

6. The method of any one of claims 1 to 4 further comprising:
obtaining, from a location tracking unit of the portable communication terminal, the current location of the portable communication terminal (2) upon detecting the loss of the wireless connection;
comparing the obtained current location with a map of historical usage locations; and
suppressing a dropped signal notification if the current location does not match a location on the map of historical usage locations.

7. The method of claim 6 further comprising, before the loss of the wireless connection,
obtaining, by the portable communication terminal, usage data from the smoking substitute device (10, 110);
obtaining, from the location tracking unit of the portable communication terminal, location information corresponding to the usage data;
creating the map of historical usage locations using the usage data and the corresponding location information.

8. The method of any preceding claim, wherein issuing the dropped connection notification comprises generating a visible, audible or tactile output on the portable communication device.

9. An apparatus for monitoring a smoking substitute device (10, 110), the apparatus comprising a portable communication terminal configured to communicate with the smoking substitute device (10, 110) via a wireless communication channel, wherein the portable communication terminal (2) is configured to:
determine, in response to detecting loss of a wireless connection between the portable communication terminal (2) and the smoking substitute device (10, 110), whether or not the loss of the wireless connection is notifiable, wherein determining whether or not the loss of the wireless connection is notifiable comprises determining whether or not one or more notification suppression criteria are fulfilled; and
issue a dropped connection notification upon determining that the loss of the wireless connection is notifiable,
**characterized in that** the notification suppression criteria relate to a combination of: a current location of the portable communication terminal (2), and historical smoking substitute device usage data for the current location.

10. The apparatus of claim 9, wherein the portable communication terminal (2) is configured to detect the loss of the wireless connection.

11. The apparatus of claim 9 or 10, wherein the portable communication terminal (2) is configured to suppress the dropped connection notification if the loss of the wireless connection is determined to be not notifiable.

12. The apparatus of any one of claims 9 to 11, wherein the notification suppression criteria relate to any one or any combination of:
a duration of the loss of the wireless connection;
a presence of a wireless connection between the portable communication terminal (2) and another smoking substitute device.

13. The apparatus of any one of claims 9 to 12, wherein the portable communication terminal (2) comprises a location tracking unit, and wherein the portable communication terminal (2) is configured to:
obtain, from the location tracking unit, the current location;
compare the obtained current location with a stored list of locations at which notifications are to be suppressed; and
suppress a dropped signal notification if the current location does not match a location on the stored list.

14. The apparatus of any one of claims 9 to 12, wherein the portable communication terminal (2) comprises a location tracking unit, and wherein the portable communication terminal (2) is configured to:
obtain, from the location tracking unit, the current location of the portable communication terminal (2) upon detection of the loss of the wireless connection;
compare the obtained current location with a map of historical usage locations; and
determine that the loss of the wireless connection is notifiable if the current location matches a location on the map of historical usage locations.

15. The apparatus of claim 14 comprising the smoking substitute device (10, 110),
wherein the smoking substitute device (10, 110) comprises a wireless interface configured to transmit data to the personal communication terminal across the wireless communication channel,
wherein, before the loss of the wireless connection, the smoking substitute device (10, 110) is configured to transmit to the portable communication terminal usage data, and
wherein the portable communication terminal (2) is configured to:
obtain, from the location tracking unit, location information corresponding to the usage data, and
create the map of historical usage locations using the usage data and the corresponding location information.

16. The apparatus of any one of claims 9 to 15, wherein the portable communication terminal (2) is a mobile phone.

17. A computer program product comprising a computer-readable storage medium having computer-readable instructions stored thereon, wherein the computer-readable instructions are executable as an app in a portable communication terminal to perform the method of any one of claims 1 to 8.

## Patentansprüche

1. Computerimplementiertes Verfahren zum Überwachen einer Rauchersatzvorrichtung (10, 110), wobei das Verfahren Folgendes umfasst:
Bestimmen, als Reaktion darauf, dass ein Verlust einer Drahtlosverbindung zwischen einem tragbaren Kommunikationsendgerät (2) und der Rauchersatzvorrichtung (10, 110) detektiert wird, ob der Verlust der Drahtlosverbindung zu melden ist oder nicht, durch das tragbare Kommunikationsendgerät (2), wobei das Bestimmen, ob der Verlust der Drahtlosverbindung zu melden ist oder nicht, das Bestimmen umfasst, ob ein oder mehrere Meldeunterdrückungskriterien erfüllt werden oder nicht; und
Ausgeben einer Verbindungsverlustmeldung, wenn bestimmt wurde, dass der Verlust der Drahtlosverbindung zu melden ist, durch das tragbare Kommunikationsendgerät (2),
**dadurch gekennzeichnet, dass** die Meldungsunterdrückungskriterien eine aktuelle Position des tragbaren Kommunikationsendgeräts (2) und Verlaufsnutzungsdaten der Rauchersatzvorrichtung (10, 110) für die aktuelle Position betreffen.

2. Verfahren nach Anspruch 1, das ferner Folgendes umfasst:
Detektieren des Verlusts der Drahtlosverbindung durch das tragbare Kommunikationsendgerät (2).

3. Verfahren nach Anspruch 1 oder 2, wobei die Verbindungsverlustmeldung unterdrückt wird, wenn bestimmt wird, dass der Verlust der Drahtlosverbindung nicht zu melden ist.

4. Verfahren nach einem der Ansprüche 1 bis 3, wobei die Meldungsunterdrückungskriterien ferner ein beliebiges der Folgenden oder eine beliebige Kombination daraus betreffen:
eine Dauer des Verlusts der Drahtlosverbindung;
ein Vorhandensein einer Drahtlosverbindung zwischen dem tragbaren Kommunikationsendgerät (2) und einer weiteren Rauchersatzvorrichtung.

5. Verfahren nach einem der Ansprüche 1 bis 4, das ferner Folgendes umfasst:
Erhalten der aktuellen Position des tragbaren Kommunikationsendgeräts von einer Positionsnachverfolgungseinheit des tragbaren Kommunikationsendgeräts;
Vergleichen der erhaltenen aktuellen Position mit einer gespeicherten Liste von Positionen, an denen Meldungen zu unterdrücken sind; und
Bestimmen, dass der Verlust der Drahtlosverbindung nicht zu melden ist, falls die aktuelle Position mit einer Position auf der gespeicherten Liste übereinstimmt.

6. Verfahren nach einem der Ansprüche 1 bis 4, das ferner Folgendes umfasst:
Erhalten der aktuellen Position des tragbaren Kommunikationsendgeräts (2) von einer Positionsnachverfolgungseinheit des tragbaren Kommunikationsendgeräts, wenn der Verlust der Drahtloskommunikation detektiert wird;
Vergleichen der erhaltenen aktuellen Position mit einer Karte eines Nutzungspositionsverlaufs; und
Unterdrücken einer Verbindungsverlustmeldung, falls die aktuelle Position nicht mit einer Position auf der Karte des Nutzungspositionsverlaufs übereinstimmt.

7. Verfahren nach Anspruch 6, das ferner vor dem Verlust der Drahtloskommunikation Folgendes umfasst:
Erhalten von Nutzungsdaten von der Rauchersatzvorrichtung (10, 110) durch das tragbare Kommunikationsendgerät;
Erhalten von Positionsinformationen, die den Nutzungsdaten entsprechen, von der Positionsnachverfolgungseinheit des tragbaren Kommunikationsendgeräts;
Erstellen der Karte des Nutzungspositionsverlaufs unter Verwendung der Nutzungsdaten und der entsprechenden Positionsinformationen.

8. Verfahren nach einem der vorangegangenen Ansprüche, wobei das Ausgeben der Verbindungsverlustmeldung das Erzeugen einer sichtbaren, hörbaren oder taktilen Ausgabe auf der tragbaren Kommunikationsvorrichtung umfasst.

9. Vorrichtung zum Überwachen einer Rauchersatzvorrichtung (10, 110), wobei die Vorrichtung ein tragbares Kommunikationsendgerät umfasst, das ausgelegt ist, um über einen Drahtloskommunikationskanal mit der Rauchersatzvorrichtung (10, 110) zu kommunizieren, wobei das tragbare Kommunikationsendgerät (2) ausgelegt ist, um:
als Reaktion darauf, dass ein Verlust einer Drahtlosverbindung zwischen dem tragbaren Kommunikationsendgerät (2) und der Rauchersatzvorrichtung (10, 110) detektiert wurde, zu bestimmen, ob der Verlust der Drahtlosverbindung zu melden ist oder nicht, wobei das Bestimmen, ob der Verlust der Drahtlosverbindung zu melden ist oder nicht, das Bestimmen umfasst, ob ein oder mehrere Meldeunterdrückungskriterien erfüllt werden oder nicht; und
eine Verbindungsverlustmeldung auszugeben, wenn bestimmt wurde, dass der Verlust der Drahtlosverbindung zu melden ist,
**dadurch gekennzeichnet, dass** die Meldungsunterdrückungskriterien eine Kombination aus Folgendem betreffen: einer aktuellen Position des tragbaren Kommunikationsendgeräts (2) und Verlaufsnutzungsdaten der Rauchersatzvorrichtung für die aktuelle Position.

10. Vorrichtung nach Anspruch 9, wobei das tragbare Kommunikationsendgerät (2) ausgelegt ist, um den Verlust der Drahtlosverbindung zu detektieren.

11. Vorrichtung nach Anspruch 9 oder 10, wobei das tragbare Kommunikationsendgerät (2) ausgelegt ist, um die Verbindungsverlustmeldung zu unterdrücken, wenn bestimmt wurde, dass der Verlust der Drahtlosverbindung nicht zu melden ist.

12. Vorrichtung nach einem der Ansprüche 9 bis 11, wobei die Meldungsunterdrückungskriterien ein beliebiges oder eine beliebige Kombination aus Folgenden betreffen:
eine Dauer des Verlusts der Drahtlosverbindung;
ein Vorhandensein einer Drahtlosverbindung zwischen dem tragbaren Kommunikationsendgerät (2) und einer weiteren Rauchersatzvorrichtung.

13. Vorrichtung nach einem der Ansprüche 9 bis 12, wobei das tragbare Kommunikationsendgerät (2) eine Positionsnachverfolgungseinheit umfasst und wobei das tragbare Kommunikationsendgerät (2) ausgelegt ist, um:
die aktuelle Position von der Positionsnachverfolgungseinheit zu erhalten;
die erhaltene aktuelle Position mit einer gespeicherten Liste von Positionen zu vergleichen, an denen Meldungen zu unterdrücken sind; und
eine Meldung über ein verlorenes Signal zu unterdrücken, wenn die aktuelle Position nicht mit einer Position auf der gespeicherten Liste übereinstimmt.

14. Vorrichtung nach einem der Ansprüche 9 bis 12, wobei das tragbare Kommunikationsendgerät (2) eine Positionsnachverfolgungseinheit umfasst und wobei das tragbare Kommunikationsendgerät (2) ausgelegt ist, um:
die aktuelle Position des tragbaren Kommunikationsendgeräts (2) von der Positionsnachverfolgungseinheit zu erhalten, wenn der Verlust der Drahtlosverbindung detektiert wurde;
die erhaltene aktuelle Position mit einer Karte eines Nutzungspositionsverlaufs zu vergleichen; und
zu bestimmen, dass der Verlust der Drahtlosverbindung zu melden ist, wenn die aktuelle Position mit einer Position auf der Karte des Nutzungspositionsverlaufs übereinstimmt.

15. Vorrichtung nach Anspruch 14, umfassend die Rauchersatzvorrichtung (10, 110), wobei die Rauchersatzvorrichtung (10, 110) eine Drahtlosschnittstelle umfasst, die ausgelegt ist, um Daten über den Drahtloskommunikationskanal an das persönliche Kommunikationsendgerät zu übertragen,
wobei die Rauchersatzvorrichtung (10, 110) vor dem Verlust der Drahtloskommunikation ausgelegt ist, um Nutzungsdaten an das tragbare Kommunikationsendgerät zu übertragen, und
wobei das tragbare Kommunikationsendgerät (2) ausgelegt ist, um:
Positionsinformationen, die den Nutzerdaten entsprechen, von der Positionsnachverfolgungseinheit zu erhalten und
die Karte des Nutzungspositionsverlaufs unter Verwendung der Nutzungsdaten und den entsprechenden Positionsinformationen zu erstellen.

16. Vorrichtung nach einem der Ansprüche 9 bis 15, wobei das tragbare Kommunikationsendgerät (2) ein Mobiltelefon ist.

17. Computerprogrammprodukt, umfassend ein computerlesbares Speichermedium, das darauf gespeicherte computerlesbare Befehle aufweist, wobei die computerlesbaren Befehle als App in einem tragbaren Kommunikationsendgerät ausführbar sind, um ein Verfahren nach einem der Ansprüche 1 bis 8 durchzuführen.

## Revendications

1. Procédé mis en oeuvre par ordinateur pour surveiller un dispositif à fumer de substitution (10, 110), le procédé comprenant les étapes consistant à :
déterminer, par l'intermédiaire d'un terminal de communication portable (2), en réponse à la détection d'une perte d'une connexion sans fil entre le terminal de communication portable (2) et le dispositif à fumer de substitution (10, 110), si oui ou non la perte de la connexion sans fil doit être notifiée, dans lequel déterminer si oui ou non la perte de la connexion sans fil doit être notifiée comprend l'étape consistant à déterminer si oui ou non un ou plusieurs critères de suppression de notification sont remplis ; et
émettre, par l'intermédiaire du terminal de communication portable (2) lorsqu'il est déterminé que la perte de la connexion sans fil doit être notifiée, une notification de connexion interrompue,
**caractérisé en ce que** les critères de suppression de notification sont relatifs à une localisation actuelle du terminal de communication portable (2), et à des données historiques d'utilisation du dispositif à fumer de substitution (10, 110) pour la localisation actuelle.

2. Procédé selon la revendication 1, comprenant en outre l'étape consistant à :
détecter, par l'intermédiaire du terminal de communication portable (2), la perte de la connexion sans fil.

3. Procédé selon la revendication 1 ou 2, dans lequel la notification de connexion interrompue est supprimée lors de la détermination que la perte de la connexion sans fil n'est pas notifiable.

4. Procédé selon l'une quelconque des revendications 1 à 3, dans lequel les critères de suppression de notification sont relatifs en outre à l'une quelconque ou à une combinaison quelconque :
d'une durée de la perte de la connexion sans fil ;
de la présence d'une connexion sans fil entre le terminal de communication portable (2) et un autre dispositif à fumer de substitution.

5. Procédé selon l'une quelconque des revendications 1 à 4, comprenant en outre les étapes consistant à :
obtenir, à partir d'une unité de suivi de localisation du terminal de communication portable, la localisation actuelle du terminal de communication portable ;
comparer la localisation actuelle obtenue avec une liste stockée de localisations au niveau desquelles les notifications doivent être supprimées ; et
déterminer que la perte de la connexion sans fil n'est pas notifiable si la localisation actuelle correspond à une localisation sur la liste stockée.

6. Procédé selon l'une quelconque des revendications 1 à 4, comprenant en outre les étapes consistant à :
obtenir, à partir d'une unité de suivi de localisation du terminal de communication portable, la localisation actuelle du terminal de communication portable (2) lors de la détection de la perte de la connexion sans fil ;
comparer la localisation actuelle obtenue avec une carte de localisations d'utilisation historiques ; et
supprimer une notification de signal interrompue si la localisation actuelle ne correspond pas à une localisation sur la carte des localisation d'utilisation historiques.

7. Procédé selon la revendication 6, comprenant en outre les étapes consistant à, avant la perte de la connexion sans fil, obtenir, par l'intermédiaire du terminal de communication portable, des données d'utilisation à partir du dispositif à fumer de substitution (10, 110) ;
obtenir, à partir de l'unité de suivi de localisation du terminal de communication portable, des informations de localisation correspondant aux données d'utilisation ;
créer la carte de localisations d'utilisation historiques en utilisant les données d'utilisation et les informations de localisation correspondantes.

8. Procédé selon l'une quelconque des revendications précédentes, dans lequel l'émission de la notification de connexion interrompue comprend la génération d'une sortie visible, audible ou tactile sur le dispositif de communication portable.

9. Appareil pour surveiller un dispositif à fumer de substitution (10, 110), l'appareil comprenant un terminal de communication portable configuré pour communiquer avec le dispositif à fumer de substitution (10, 110) via un canal de communication sans fil, dans lequel le terminal de communication portable (2) est configuré pour :
déterminer, en réponse à la détection d'une perte d'une connexion sans fil entre le terminal de communication portable (2) et le dispositif à fumer de substitution (10, 110), si oui ou non la perte de la connexion sans fil doit être notifiée, dans lequel déterminer si oui ou non la perte de la connexion sans fil doit être notifiée comprend déterminer si oui ou non un ou plusieurs critères de suppression de notification sont remplis ; et
émettre une notification de connexion interrompue lorsqu'il est déterminé que la perte de la connexion sans fil est notifiable,
**caractérisé en ce que** les critères de suppression de notification sont relatifs à une combinaison : d'une localisation actuelle du terminal de communication portable (2), et de données d'utilisation historiques de dispositif à fumer de substitution pour la localisation actuelle.

10. Appareil selon la revendication 9, dans lequel le terminal de communication portable (2) est configuré pour détecter la perte de la connexion sans fil.

11. Appareil selon la revendication 9 ou 10, dans lequel le terminal de communication portable (2) est configuré pour supprimer la notification de connexion interrompue si la perte de la connexion sans fil est déterminée comme n'étant pas notifiable.

12. Appareil selon l'une quelconque des revendications 9 à 11, dans lequel les critères de suppression de notification sont relatifs à l'une quelconque ou à une combinaison quelconque :
d'une durée de la perte de la connexion sans fil ;
de la présence d'une connexion sans fil entre le terminal de communication portable (2) et un autre dispositif à fumer de substitution.

13. Appareil selon l'une quelconque des revendications 9 à 12, dans lequel le terminal de communication portable (2) comprend une unité de suivi de localisation, et dans lequel le terminal de communication portable (2) est configuré pour :
obtenir, à partir de l'unité de suivi de localisation, la localisation actuelle ;
comparer la localisation actuelle obtenue avec une liste stockée de localisation au niveau desquelles les notifications doivent être supprimées ; et
supprimer une notification de signal interrompue si la localisation actuelle ne correspond pas à une localisation de la liste stockée.

14. Appareil selon l'une quelconque des revendications 9 à 12, dans lequel le terminal de communication portable (2) comprend une unité de suivi de localisation, et dans lequel le terminal de communication portable (2) est configuré pour :
obtenir, à partir de l'unité de suivi de localisation, la localisation actuelle du terminal de communication portable (2) lors de la détection de la perte de la connexion sans fil ;
comparer la localisation actuelle obtenue avec une carte de localisations d'utilisation historiques ; et
déterminer que la perte de la connexion sans fil doit être notifiée si la localisation actuelle correspond à une localisation sur la carte des emplacements d'utilisation historiques.

15. Appareil selon la revendication 14, comprenant le dispositif à fumer de substitution (10, 110),
dans lequel le dispositif à fumer de substitution (10, 110) comprend une interface sans fil configurée pour transmettre des données au terminal de communication personnel à travers le canal de communication sans fil,
dans lequel, avant la perte de la connexion sans fil, le dispositif à fumer de substitution (10, 110) est configuré pour transmettre des données d'utilisation au terminal de communication portable, et
dans lequel le terminal de communication portable (2) est configuré pour :
obtenir, à partir de l'unité de suivi de localisation, des informations de localisation correspondant aux données d'utilisation, et
créer la carte de localisations d'utilisation historiques en utilisant les données d'utilisation et les informations d'emplacement correspondantes.

16. Appareil selon l'une quelconque des revendications 9 à 15, dans lequel le terminal de communication portable (2) est un téléphone mobile.

17. Produit de programme informatique comprenant un support de stockage lisible par ordinateur sur lequel sont stockées des instructions lisibles par ordinateur, dans lequel les instructions lisibles par ordinateur sont exécutées en tant qu'application dans un terminal de communication portable pour exécuter le procédé selon l'une quelconque des revendications 1 à 8.
